# EUROPÄISCHE PATENTSCHRIFT

(11) **EP 0 504 606 B1**
(45) Veröffentlichungstag und Bekanntmachung des Hinweises auf die Patenterteilung: **29.03.1995**
(21) Anmeldenummer: 92102816.3
(22) Anmeldetag: 20.02.1992
(51) Int. Cl.: B60S 1/08

(54) **Steuereinrichtung für den Scheibenwischbetrieb eines Kraftfahrzeuges**
Control device for the windscreen wiper motor of a motor vehicle
Dispositif de commande du moteur d'essuie-glace d'un véhicule automobile

(30) Priorität: 21.03.1991 DE 4109318
(43) Veröffentlichungstag der Anmeldung: 23.09.1992
(73) Patentinhaber: MAN Nutzfahrzeuge Aktiengesellschaft, 80976 München (DE)
(72) Erfinder: Eisermann, Günter, W-8047 Karlsfeld (DE)

(56) Entgegenhaltungen:
- EP-A- 0 399 217
- DE-A- 3 008 946
- DE-A- 3 021 877
- DE-C- 3 327 373
- GB-A- 2 231 406
- PATENT ABSTRACTS OF JAPAN vol. 015, no. 350 (M-1154)5. September 1991; JP-A-3 136 954

## Beschreibung

Die Erfindung betrifft eine Steuereinrichtung für den Scheibenwischbetrieb eines Kraftfahrzeuges.

Einfache Scheibenwischersteuerungen bewirken durch einen entsprechenden manuellen Abruf mittels eines Betriebsartenschalters in der Regel folgende Wischbetriebsweisen, nämlich in Stufe 1 Intervallbetrieb, in Stufe 2 Dauerbetrieb und gegebenenfalls in Stufe 3 einen Dauerbetrieb mit höherer Wischgeschwindigkeit.

Es sind aber auch schon Scheibenwischersteuerungen bekannt, bei denen mittels eines fahrzeuginternen Computers entweder abhängig von der Fahrgeschwindigkeit oder einem im Bereich der Windschutzscheibe erfaßten Näßegrad der Wischbetrieb geregelt wird. Diese Automatiklösungen können in der Regel nur teilweise befriedigen. Letzteres deswegen, weil es bestimmte Fahrzustände gibt, denen in Verbindung mit besonders kritischen Witterungsumständen durch besagte Automatikprogramme nicht Rechnung getragen werden kann.

Desweiteren ist aus der EP-A-0 399 217 eine Steuereinrichtung für den Scheibenwischbetrieb eines Kraftfahrzeuges bekannt, mit einem Steuergerät für die Betriebssteuerung des Wischermotors und einem Betriebsartenschalter mit wenigstens drei Schaltstellungen, nämlich _{"}Aus", _{"}Intervallbetrieb" und _{"}Dauerbetrieb". Damit hat der Fahrer die Möglichkeit, mit diesem einen Betriebsartenschalter den jeweiligen Wischbetrieb anzuwählen. Außerdem läuft bei dieser bekannten Lösung unabhängig von der Einflußnahme des Fahrers ein auf der Ausgestaltung des Steuergerätes basierendes Automatikprogramm ab, dergestalt, daß nach vorherigem Überschreiten einer bestimmten Geschwindigkeitsschwelle und nachfolgendem Unterschreiten dieser Geschwindigkeitsschwelle automatisch von einem vorher manuell eingestellten Wischbetrieb in die nächst niedrigere Stufe des Wischbetriebes getreten wird, also beispielsweise aus Dauerwischbetrieb in Intervallbetrieb. Ein Ausstieg aus diesem Automatikprogramm ist nicht möglich, es sei denn, der Fahrer setzt den Wischbetrieb vollständig still.

Es ist daher Aufgabe der Erfindung, eine Steuereinrichtung für den Scheibenwischbetrieb eines Kraftfahrzeugs zu schaffen, die es ermöglicht, in allen Fahrbetriebszuständen auch bei kritschen Witterungsumständen eine ausreichende Reinigung der zu wischenden Scheibe sicherzustellen.

Diese Aufgabe wird erfindungsgemäß durch die in Anspruch 1 angegebene Steuereinrichtung gelöst, wobei diese als Kombination aller dort angegebenen Bauteile in Verbindung mitden angegebenen Operationsmöglichkeiten zu verstehen ist.

Vorteilhafte Ausgestaltungen bzw. Weiterbildungen dieser Lösung sind in den Unteransprüchen angegeben.

Die erfindungsgemäße Lösung erlaubt dem Fahrer einerseits die größtmögliche Freiheit im Hinblick aufdie individuell gewünschte Wischbetriebsweise durch manuelle Einstellung derselben über den Betriebsartenschalter und das Vorwahlorgan. Andererseits hat der Fahrer zu seiner Entlastung die Möglichkeit, verschiedene Automatikprogramme abzurufen, worauf dann per Computer in Abhängigkeit von der Fahrgeschwindigkeit und/oder einem detektierten Nässegrad eine entsprechende Wischbetriebsweise geregelt wird. Außerdem hat der Fahrer jederzeit die Möglichkeit, z.B. bei sich gravierend ändernden Fahrsituationen oder sich extrem rasch ändernden Witterungsbedingungen, aus dem eingestellten Automatikprogramm auszusteigen und dann unmittelbar manuell wieder die gewünschte Wischbetriebsweise einzustellen.

Nachstehend ist die erfindungsgemäße Steuereinrichtung anhand mehrerer in der Zeichnung dargestellter Ausführungsbeispiele näher erläutert. In der Zeichnung zeigen:
- Fig. 1,2,3,4: schematisch je eine Ausführungsform der erfindungsgemäßen Steuereinrichtung, und
- Fig. 5: eine konkrete Ausführungsform die Ausgestaltung der vom Fahrer zu betätigenden Bedienungsorgane betreffend an einem Lenkstockschalthebel.

In den Figuren sind gleiche bzw. einander entsprechende Bauteile mit gleichen Bezugszeichen angezogen.

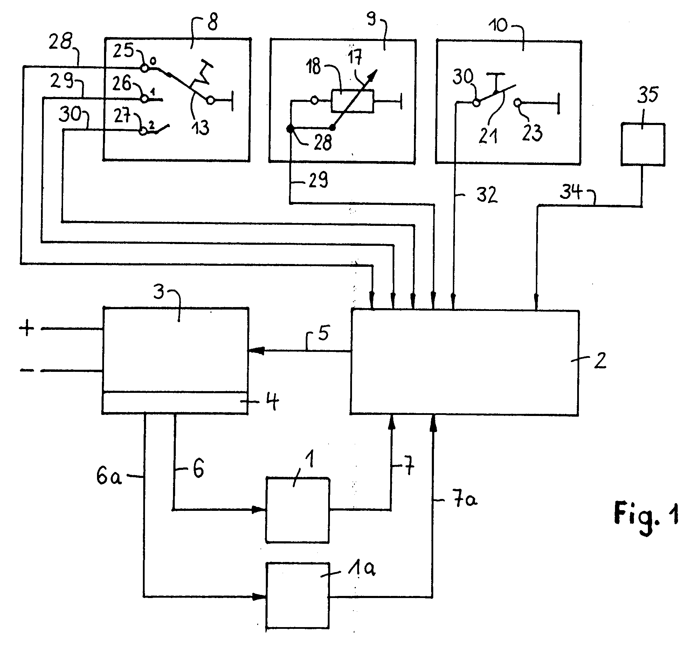

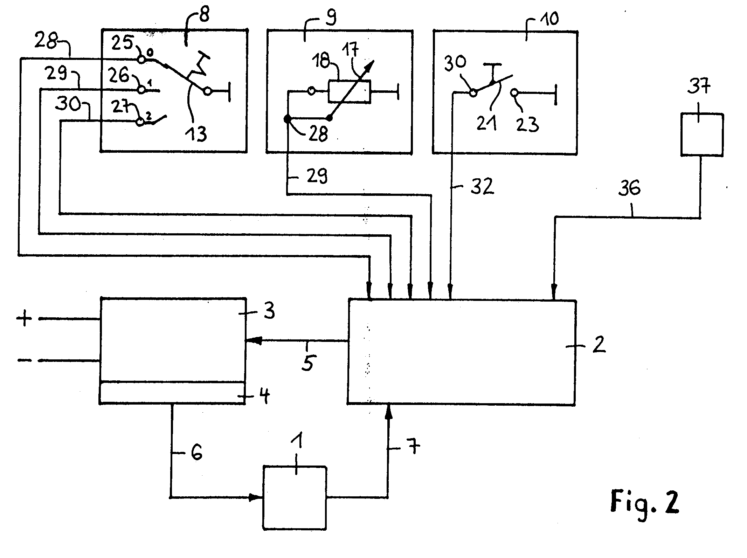

Die Steuereinrichtung für den Wischbetrieb der Windschutzscheibe eines Kraftfahrzeuges mittels eines oder mehrerer Scheibenwischer umfaßt einen letztere über ein entsprechendes Getriebe mit Gestänge antreibenden Wischermotor 1 (Fig. 2 bis 4) oder, wie aus Fig. 1 ersichtlich, für jeden Scheibenwischer - unter Entfall des Wischergestänges - einen eigenen Wischermotor 1, 1a sowie einen Computer 2 und ein weiteres Steuergerät 3 mit Leistungsteil 4 für die Steuerung des Wischermotorbetriebes. Computer 2 und Steuergerät 3 können als getrennte Bauteile oder ineinander bzw. zusammengebaut eine Baueinheit bildend realisiert sein. Bei dem Computer 2 kann es sich um ein eigenständiges, nur zur Regelung des Wischbetriebes dienendes Bauteil oder um den fahrzeugintern gegebenenfalls vorhandenen Bordrechner handeln, der unter anderem auch die Wischerbetriebsregelung übernimmt. Ein solcher Computer ist seinem allgemeinen Aufbau nach bekannt, er besteht aus einem Mikroprozessor (CPU), Daten- und Programmspeichern und einer Ein- und Ausgabeperipherie, welche Teile intern über ein entsprechendes BUS-System miteinander verknüpft sind.

Das Steuergerät 3 dient zur Anlauf- und Abbremssteuerung sowie zur Drehzahl- bzw. Geschwindigkeitseinstellung des Wischermotors 1. Das Steuergerät 3 arbeitet auf der Basis von Befehlen, die ihm vom Computer 2 über Steuerleitung 5 zugeführt werden. Die Ausgangsbefehle des Steuergerätes 3 werden vom Leistungsteil 4 entsprechend verstärkt und über Leitung 6 dem Wischermotor 1 bzw. über Leitungen 6, 6a den Wischermotoren 1, 1a zugeführt, der/die diese dann in eine entsprechende Betriebsweise umsetzt/umsetzen. Die Funktion des Wischermotors 1 bzw. der Wischermotoren 1, 1a wird überwacht vom Computer 2, der entsprechende Kontrollsignale über Leitung 7 bzw.Leitungen 7, 7a zugeführt bekommt.

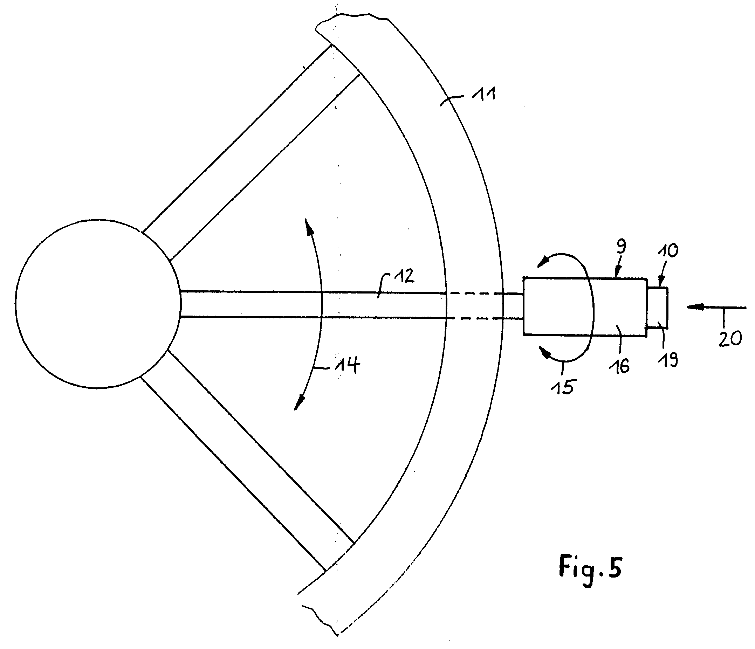

Als weitere Teile der Steuereinrichtung sind zu nennen ein Betriebsartenschalter 8 mit wenigstens drei Schaltstellungen (0 = aus, 1 = Intervallbetrieb, 2 = Dauerbetrieb), ein Vorwahlorgan 9 für Einstellung der Intervall-Pausen-Zeit und Wischgeschwindigkeit, und ein Automatik-Ein-Aus-Schalter 10. Die Organe 8, 9 10 können an und in Verbindung mit einem im Bereich des Lenkrades 11 des Fahrzeuges - wie aus Fig. 5 ersichtlich - gegebenen Lenkstockschalthebel 12 realisiert sein. Dabei ist der Schaltfinger 13 des Betriebsartenschalters 8 am inneren Ende des Lenkstockschalthebels 12 angeordnet, während die den einzelnen Schaltstellungen (0-1-2) des Betriebsartenschalters 8 zugehörigen Schaltkontakte 15, 26, 27 am Lenkstock des Lenkrades 11 angeordnet sind. Die Betätigung des Lenkstockschalthebels 12 für Einstellung des Betriebsartenschalters 8 in seine verschiedenen Schaltstellungen (0-1-2) ist durch Pfeil 14 angedeutet. Das Vorwahlorgan 9 ist durch eine am äußeren Endbereich des Lenkstockschalthebels 12 angeordnete, um diesen in Richtung des Pfeiles 15 zwischen einer Null- und Maximalstellung hin- und her verdrehbare Einstellhülse 16 gebildet, die innenseitig einen Schleifkontakt 17 (siehe Fig. 1-3) aufweist, der mit einem lenkstockschalthebelseitig befestigten Widerstand 18 ein Potentiometer oder dergleichen bildet.

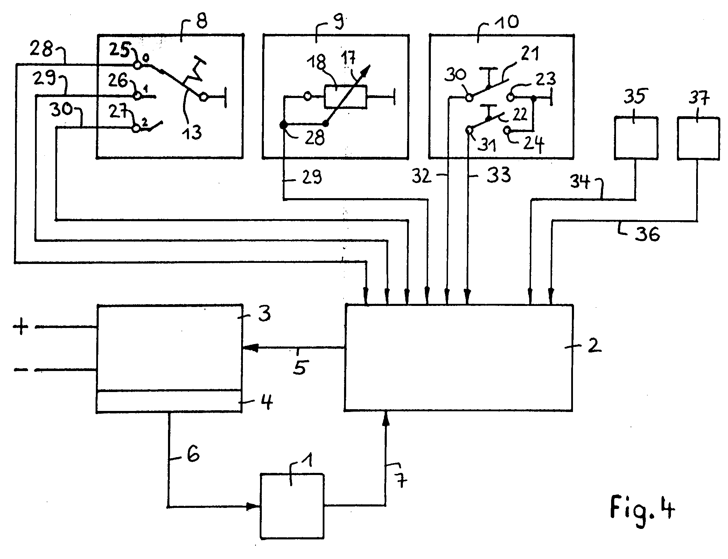

Der Automatik-Ein-Aus-Schalter 10 ist durch einen außen endseitig des Lenkstockschalthebels 12 gegebenen, in Richtung des Pfeiles 20 betätigbaren Druckknopf 19 realisiert, der innenseitig mit einem Schaltkontakt 21 (siehe Fig. 1 bis 3) bzw. zwei Schaltkontakten 21, 22 (siehe Fig. 4) ausgestattet ist, welcher mit einem lenkstockschalthebelseitig gegebenen Gegenkontakt 23 bzw.welche mit zwei lenkstockschalthebelseitig gegebenen Gegenkontakten 23, 24 in Verbindung bringbar ist bzw. sind. Der Automatik-Ein-Aus-Schalter 10 kann als Tastschalter oder als in jeweiliger Schaltstellung verrastbarer Schalter ausgebildet sein, in letzterem Fall wäre die Verrastung über den Druckknopf 19 und den Lenkstockschalthebel 12 mittels entsprechender Rastorgane sicherzustellen.

Die den einzelnen Sc haltstellungen (0-1-2) des Betriebsartenschalter 8 zugehörigen Schaltkontakte 25, 26, 27 sind über je eine Leitung 28, 29, 30, der Anschluß 28 des das Vorwahlorgan 9 bildende Potentiometers 17, 18 ist über Leitung 29 und der Anschluß 30 bzw. die Anschlüsse 30, 31 des Automatik-Ein-Aus-Schalters 10 ist bzw. sind über Leitung 32 bzw. 33 mit dem Computer 2 verbunden.

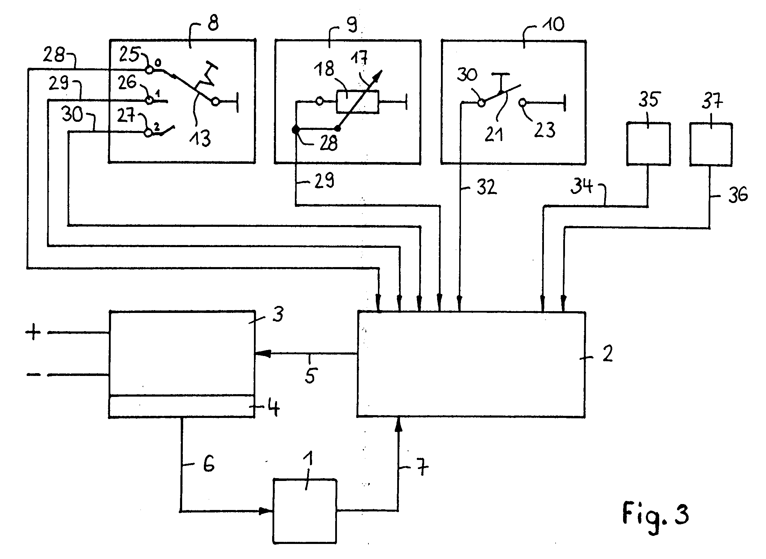

Als weitere Teile der Steuereinrichtung sind zu nennen ein über Leitung 34 mit dem Computer 2 verbundener Geschwindigkeitssensor 35 (erfaßt und meldet Fahrgeschwindigkeit) sowie zusätzlich (wie aus Fig. 3 und 4 ersichtlich) oder anstelle des letzteren (wie aus Fig. 2 ersichtlich) ein über Leitung 36 mit dem Computer 2 verbundener, im Bereich der Winschutzscheibe oder einer anderen geeigneten Stelle den Nässegrad erfassender Nässesensor 37.

Die vorstehend geschilderten Bauteile sind für die Realisierung folgender Operationsmöglichkeiten ausgelegt bzw. lassen letztere wie folgt zu, nämlich
a) eine manuelle Einschaltung des Intervall-Wischbetriebes (Betriebsartenschalter 8 von 0 nach 1) und manuelle, stufenlos oder in fest vorgegebenen Abstufungen mögliche Vorwahl der Intervall-Pausen-Zeit (Vorwahlorgan 9 verstellen), Erkennung und Umsetzung dieser Einstellungen durch den Computer 2, der dann über das Steuergerät 3, 4 den Wischermotor-Betrieb regelt,
b) eine manuelle Einschaltung des Dauerwischbetriebes (Betriebsartenschalter 8 von 0 oder 1 nach 2) und manuelle, stufenlos oder in fest vorgegebenen Abstufungen mögliche Vorwahl der Wischgeschwindigkeit (Vorwahlorgan 9 verstellen), Erkennung und Umsetzung dieser Einstellungen durch den Computer 2, der dann über das Steuergerät 3, 4 den Wischermotor-Betrieb regelt,
c) ein manueller Abruf eines je nach Stellung (0, 1 oder 2) des Betriebsartenschalters 8 spezifischen Automatikprogramms (Automatik-Ein-Aus-Schalter 10 betätigen), worauf vom Computer 2 per Programm in Abhängigkeit von der Fahrgeschwindigkeit (Sensor 35) und/oder einem detektierten Nässegrad (Sensor 37) die Intervall-Pausen-Zeiten, der Übergang in Dauerwischbetrieb und die Wischgeschwindigkeit während letzterem eingestellt und solchermaßen der Wischermotorbetrieb über das Steuergerät 3, 4 geregelt wird,
d) ein manueller Ausstieg aus dem Automatikprogramm durch Einstellung des Betriebsartenschalters 8 in eine andere als momentan gegebene Schaltstufe und/oder durch Abschaltung mittels des Automatik-Ein-Aus-Schalters 10.

Das vorstehend unter Punkt c) erwähnte Automatikprogramm ist auf die Art des Fahrzeugs (Pkw, Lkw, Omnibus) und dessen spezifische, charakteristische Einsatz- bzw. Betriebsweise angepaßt. Für einen Pkw mit einer Höchstgeschwindigkeit von 140 km/h kann ein anderes Automatikprogramm zur Anwendung kommen als für einen auf eine Höchstgeschwindigkeit von 200 oder mehr km/h ausgelegten Pkw. Gleiches gilt für einen Stadtlinienbus im Vergleich zu einem Reisebus oder für einen nur im Verteilerverkehr eingesetzten Lastkraftwagen im Vergleich zu einem hauptsächlich auf Langstrecken eingesetzten Fernverkehrslastkraftwagen.

Fig. 1 nimmt Bezug auf eine Steuereinrichtung, in deren Computer 2 wenigstens ein fahrgeschwindigkeitsabhängig arbeitendes, fahrzeugspezifisch und einsatzspezifisch angepaßtes Automatikprogramm für den Wischbetrieb eingespeichert ist.

In einem ersten Fall kann dabei ein Automatikprogramm vorgesehen sein, bei dessen Abrufung vom Fahrer durch Betätigung des Automatik-Ein-Aus-Schalters 10 - bei gleichzeitig in Schaltstellung 0 (=Aus) befindlichem Betriebsartenschalter 8 und in beliebiger Einstellposition befindlichem Vorwahlorgan 9 - vom Computer 2
bei V = V₁ (0 km/h) ein Intervallbetrieb mit bestimmter Pausenzeit,
bei V ≦ V₂ (20 km/h) > V₁ ein Intervallbetrieb mit kürzerer Pausenzeit,
bei V ≦ V₃ (40 km/h) > V₂ ein Intervallbetrieb mit noch kürzerer Pausenzeit,
bei V ≦ V₄ (60 km/h) > V₃ ein langsamer Dauerbetrieb,
bei V ≦ V₅ (80 km/h) > V₄ ein schnellerer Dauerbetrieb, und
bei V > V₅ der schnellste Dauerbetrieb
initiiert wird. Dieses Automatikprogramm eignet sich beispielsweise für einen Einsatz in einem Fernverkehrs-Lkw oder Reiseomnibus, aber auch in einem auf eine Höchstgeschwindigkeit bis etwa 140 km/h ausgelegten Pkw.

In einem zweiten, auf Fig.1 bezogenen Fall ist ein hiervon geringfügig abweichendes Automatikprogramm vorgesehen, bei dessen Abrufung vom Fahrer durch Betätigung des Automatik-Ein-Aus-Schalters 10 - bei gleichzeitig in Schaltstellung 0 (=Aus) befindlichem Betriebsartenschalter 8 und in beliebiger Einstellposition befindlichem Vorwahlorgan 9 - vom Computer 2
bei V = V₁ (0 km/h) ein Intervallbetrieb mit bestimmter Pausenzeit,
bei V ≦ V₂ (20 km/h) > V₁ ein Intervallbetrieb mit kürzerer Pausenzeit,
bei V ≦ V₃ (40 km/h) > V₂ ein Intervallbetrieb mit noch kürzerer Pausenzeit,
bei V ≦ V₄ (60 km/h) > V₃ ein langsamer Dauerbetrieb, und
bei V > V₄ mit zunehmender Geschwindigkeit ein entsprechend zunehmend schnellerer Dauerbetrieb initiiert wird. Dieses Automatikprogramm ist universell einsetzbar, da außerörtliche Fahrgeschwindigkeiten grundsätzlich als Führungsgrößefür die Erhöhung oder Reduzierung der Wischgeschwindigkeit maßgebend sind.

In einem dritten, auf Fig. 1 bezogenen Fall ist ein Automatikprogramm vorgesehen, das zusätzlich zu einem der beiden vorgenannten Automatikprogramme oder alleine in den Computer 2 eingespeichert sein kann und eine noch feinfühligere Einstellung des Intervallwischbetriebes betrifft. Dieses Automatikprogramm ist vom Fahrer durch Betätigung des Automatik-Ein-Aus-Schalters 10 und durch Einstellung des Betriebsartenschalters 8 in Stellung 1 (= Intervallbetrieb) - bei gleichzeitig in beliebiger Einstellposition befindlichen Vorwahlorgan 9 - abrufbar.

Dann wird vom Computer 2
bei V = V₁ (0 km/h) ein Intervallbetrieb mit bestimmter Pausenzeit,
bei V = V₂ (20 km/h) > V₁ ein Intervallbetrieb mit kürzerer Pausenzeit,
bei V = V₃ (40 km/h) > V₂ ein Intervallbetrieb mit noch kürzerer Pausenzeit, und
bei V > V₃ ein Intervallbetrieb mit kürzester Pausenzeit initiiert. Falls der Fahrer dann z.B.einen Übergang in einen Dauerwischbetrieb wünscht bzw. für nötig hält, kann er aus diesem Automatikprogramm aussteigen, entweder durch nochmalige Betätigung des Automatik-Ein-Aus-Schalters 10 und/oder durch Betätigung des Betriebsartenschalters in Schaltstellung 2 (= Dauerbetrieb). Im einen Fall erfolgt dann ein Wechsel auf eines der beiden erstgenannten Automatikprogramme, im zweiten Fall hat der Fahrer dann durch Betätigung des Vorwahlorganes 9 die gewünschte Wischgeschwindigkeit einzustellen.

In einem vierten, auf Fig. 1 bezogenen Fall ist ein Automatikprogramm vorgesehen, das anstelle jenes gemäß dem vorstehend geschilderten dritten Fall verwendet werden kann und ebenso wie letzteres zusätzlich zu einem der beiden erstgenannten (Fall 1 und 2) Automatikprogramme oder alleine in den Computer 2 eingespeichert ist und einen nahtlosen Übergang von einem manuell eingestellten Intervallwischbetrieb in den automatisch gesteuerten bewirkt. Dieses Automatikprogramm ist - bei in Schaltstellung 1 (= Intervallbetrieb) befindlichen Betriebsartenschalter 8 und bei in einer von der Grundstellung verschiedenen Einstellposition befindlichen Vorwahlorgan 9 - vom Fahrer durch Betätigung des Automatik-Ein-Aus-Schalters 10 abrufbar. Vom Computer 2 wird dann zunächst eine Fortsetzung des Intervallbetriebes mit jener der manuellen Vorwahl mit dem Vorwahlorgan 9 entsprechenden Pausenzeit, bei sich anschließend vergrößernder Fahrgeschwindigkeit ein Intervallbetrieb mit kürzeren Pausenzeiten bzw. bei sich anschließend verkleinernder Fahrgeschwindigkeit ein Intervallbetrieb mit längeren Pausenzeiten initiiert. Auch in diesem Fall kann der Fahrer, z.B. wenn er einen Übergang in Dauerwischbetrieb wünscht bzw. für nötig hält, aus diesem Automatikprogramm aussteigen und zwar auf gleiche Weise und mit gleichen Fortsetzungen wie in Verbindung mit Fall 3 geschildert.

Was in den Fällen 3 und 4 für den Intervallwischbetrieb vorgesehen ist, kann entsprechend auch für den Dauerwischbetrieb vorgesehen sein. Demzufolge kann in einen fünften, auf Fig. 1 bezogenen Fall ein Automatikprogramm vorgesehen sein, das zusätzlich zu einem der beiden ersten (Fall 1 oder 2) und einen der beiden folgenden (Fall 3 oder 4) oder aber auch alleine in den Computer 2 eingespeichert ist und lediglich eine fahrgeschwindigkeitsabhängige Regelung des Dauerwischbetriebes betrifft. Dieses Automatikprogramm ist bei in Schaltstellung 2 (= Dauerbetrieb) befindlichem oder dahin zu betätigenden Betriebsartenschalter 8 und bei in beliebiger Einstellposition befindlichem Vorwahlorgan 9 vom Fahrer durch Betätigung des Automatik-Ein-Aus-Schalters 10 abrufbar. Vom Computer 2 wird dann
bei V ≦ V₄ (60 km/h) > V₃ ein langsamer Dauerbetrieb,
bei V ≦ V₅ (80 km/h) > V₄ ein schnellerer Dauerbetrieb, und
bei V > V₅ der schnellste Dauerbetrieb
initiiert.Auch in diesem Fall kann der Fahrer, z.B. wenn er einen Übergang in den Intervallwischbetrieb wünscht, aus diesem Automatikprogramm aussteigen, entweder durch nochmalige Betätigung des Automatik-Ein-Aus-Schalters 10 und/oder durch Betätigung des Betriebsartenschalters 8 in Schaltstellung 1 ( = Intervallbetrieb). Im einen Fall erfolgt dann ein Wechsel auf eines der beiden Automatikprogramme gemäß Fall 3 oder 4 oder jenes gemäß Fall 1 oder 2, im zweiten Fall kann der Fahrer aber auch den kompletten Ausstieg aus den Automatikprogrammen herbeiführen, worauf er dann durch Betätigung des Vorwahlorgans 9 die gewünschte Pausenzeit für den Intervallbetrieb einzustellen hat.

Alternativ zu vorstehend geschildertem (Fall 5) kann auch ein Automatikprogramm vorgesehen sein, das als sechster, auf Fig. 1 bezogener Fall nachfolgend erläutert ist. Auch dieses Automatikprogramm kann zusätzlich zu einem der beiden ersten (Fall 1 oder 2) und einem der beiden folgenden (Fall 3 oder 4) oder auch alleine in den Computer 2 eingespeichert sein und bewirkt einen nahtlosen Übergang von einem manuell eingestellten Dauerwischbetrieb in einen automatisch gesteuerten. Dieses Automatikprogramm ist - bei in Schaltstellung 2 (= Dauerbetrieb) befindlichem Betriebsartenschalter 8 und bei in einer von der Grundstellung verschiedenen Einstellposition befindlichem Vorwahlorgan 9 - vom Fahrer durch Betätigung des Automatik-Ein-Aus-Schalters 10 abrufbar. Dann wird vom Computer 2 zunächst eine Fortsetzung des Dauerwischbetriebes mit jener der manuellen Vorwahl mit dem Vorwahlorgan 9 entsprechenden Wischgeschwindigkeit, bei sich anschließend vergrößernder Fahrgeschwindigkeit eine schrittweise oder stufenlose Vergrößerung der Wischgeschwindigkeit bzw. bei sich anschließend erniedrigender Fahrgeschwindigkeit eine schrittweise bzw. stufenlose, bis zu einem von Null verschiedenen Minimum gehende Reduzierung der Wischgeschwindigkeit initiiert. Auch in diesem Fall kann der Fahrer aus diesem Automatikprogramm aussteigen und zwar auf gleiche Weise und mit gleichen Fortsetzungen wie in Verbindung mit Fall 5 geschildert.

Fig. 2 nimmt Bezug auf eine Steuereinrichtung, in deren Computer 2 ein nur vom Nässegrad abhängig arbeitendes Automatikprogramm eingespeichert ist. Bei dessen Abrufung vom Fahrer durch Betätigung des Automatik-Ein-Aus-Schalter 10 wird - bei in beliebiger Position befindlichen Betriebsartenschalter 8 und Vorwahlorgan 9 - vom Computer 2 bei geringer Nässe ein Intervallbetrieb mit bestimmter Pausenzeit, bei mittelstarker Nässe ein Intervallbetrieb mit kürzeren Pausenzeiten, bei größerer Nässe ein Übergang von Intervall - auf langsamen Dauerbetrieb und bei weiter bis zu einem Maximum zunehmender Nässe eine Vergrößerung der Dauerwischgeschwindigkeit durch entsprechende Regelung der Wischermotordrehzahl bis zu nₘₐₓ initiiert. Der Fahrer kann aus diesem Automatikprogramm aussteigen, entweder durch nochmalige Betätigung des Automatik-Ein-Aus-Schalters 10 und/oder eine Verstellung des Betriebsartenschalters 8 in eine andere als vorgegebene Einstellposition.

Im Fall der Steuereinrichtung gemäß Fig. 3 ist ein sowohl vom mittels Sensor 37 erfaßten Nässegrad als auch wenigstens ein von der vom Sensor 35 erfaßten Fahrgeschwindigkeit abhängig arbeitendes Automatikprogramm in den Computer 2 eingespeichert. Dieses Automatikprogramm ist vom Fahrer durch Betätigung des Automatik-Ein-Aus-Schalters 10 - bei in beliebiger Einstellposition befindlichem Betriebsartenschalter 8 und Vorwahlorgan 9 - abrufbar. Vom Computer 2 wird dann
a) bei V = V₁ (= 0 km/h) und geringer Nässe ein Intervallbetrieb mit bestimmter Pausenzeit,
b) bei gleichbleibender Nässe, aber zunehmender Fahrgeschwindigkeit bei V ≦ V₂ (20 km/h) > V₁ ein Intervallbetrieb mit kürzerer Pausenzeit bei V ≦ V₃ (40 km/h) > V₂ ein Intervallbetrieb mit noch kürzerer Pausenzeit, bei V ≦ V₄ (60 km/h) > V₃ ein langsamer Dauerbetrieb und bei V > V₄ ein der zunehmenden Fahrgeschwindigkeit entsprechend zunehmend schnellerer Dauerbetrieb, oder
c) bei zunehmender Nässe und zunehmender bzw. von V₁ verschiedener Geschwindigkeit (V = V₁) ein Intervallbetrieb mit kürzerer Pausenzeit sowie ein Übergang in Dauerbetrieb mit zunehmender Dauerwischgeschwindigkeitdurch entsprechende Regelung der Wischermotordrehzahl bis nₘₐₓ
initiiert. Auch in diesem Fall kann der Fahrer aus diesem Automatikprogramm aussteigen, entweder durch nochmalige Betätigung des Automatik-Ein-Aus-Schalters 10 und/oder durch Verstellung des Betriebsartenschalters 8 in eine andere als vorher gegebene Einstellposition.

Im Fall der Steuereinrichtung gemäß Fig. 4 besteht aufgrund der Konfiguration des dortigen Automatik-Ein-Aus-Schalters 10 die Möglichkeit, folgende im Computer 2 eingespeicherte Automatikprogramme abzurufen, nämlich
a) bei Betätigung des Schalters 21 (Druckknopf 16 in erste Drückstellung) ein fahrgeschwindigkeitsabhängiges Automatikprogramm gemäß einem der vorstehend in Verbindung mit Fig. 1 geschilderten Fälle 1 bis 6, und
b) bei Betätigung des Schalters 22 (Druckknopf 16 in zweite Drückstellung) ein vom Nässegrad abhängig arbeitendes Automatikprogramm, z.B. jenes in Verbindung mit Fig. 2 beschriebene, und
c) bei Schließung beider Schalter 21, 22 (Druckknopf 16 in dritter Drückstellung) ein sowohl von der Fahrgeschwindigkeit als auch vom Nässegrad abhängig arbeitendes Automatikprogramm, z.B. jenes in Verbindung mit Fig. 3 beschriebene.

Es sei in diesem Zusammenhang darauf hingewiesen, daß der Automatik-Ein-Aus-Schalter 10 auch auf andere Weise als wie vorstehend geschildert funktionieren und des weiteren auch getrennt von den Organen 8 und 9 ausgebildetund angeordnet sein kann, z.B. als im Bereich des Armaturenbrettes oder im Bereich des Lenkrades gegebener eigenständiger Tast- oder Schiebeschalter, dem gegebenenfalls auch eine insbesondere digitale Programmanzeige zugeordnet sein kann.

Aus den vorstehend geschilderten Fällen wird die Vielzahl der Einstell- bzw. Einflußnahme - bzw. Wahlmöglichkeiten des Fahrers für einen gewünschten bzw. aus seiner Sicht notwendigen bzw.angebrachten Wischbetrieb ersichtlich.

## Patentansprüche

1. Steuereinrichtung für den Scheibenwischbetrieb eines Kraftfahrzeuges, mit einem Computer (2) und einem weiteren Steuergerät (3, 4) für die Betriebssteuerung des Wischermotors (1) bzw. der Wischermotore (1, 1a), einem Betriebsartenschalter (8) mit wenigstens drei Schaltstellungen (0 = aus, 1 = Intervallbetrieb, 2 = Dauerbetrieb), einem Vorwahlorgan (9) für Einstellung der Intervall-Pausen-Zeit und Wischgeschwindigkeit, und einem Automatik-Ein-Aus-Schalter (10), welche Bauteile folgende kombinatiorische Operationsmöglichkeiten zulassen,
a) manuelle Einschaltung des Intervall-Wischbetriebes (Betriebsartenschalter von 0 nach 1) und manuelle, stufenlos oder in fest vorgegebenen Abstufungen mögliche Vorwahl der Intervall-Pausen-Zeit (Vorwahlorgan verstellen), Erkennung und Umsetzung dieser Einstellungen durch Computer (2), der dann über das Steuergerät (3, 4) den Wischermotor-Betrieb regelt,
b) manuelle Einschaltung des Dauerwischbetriebes (Betriebsartenschalter von 0 oder 1 nach 2) und manuelle, stufenlos oder in fest vorgegebenen Abstufungen mögliche Vorwahl der Wischgeschwindigkeit (Vorwahlorgan verstellen), Erkennung und Umsetzung dieser Einstellungen durch Computer (2), der dann über das Steuergerät (3, 4) den Wischermotor-Betrieb regelt,
c) manueller Abruf eines je nach Stellung (0, 1 oder 2) des Betriebsartenschalters (8) spezifischen Automatikprogramms (Automatik-Ein-Aus-Schalter (10) betätigen), worauf vom Computer (2) auf der Basis desselben in Abhängigkeit von der Fahrgeschwindigkeit und/oder einem detektierten Nässegrad die Intervall-Pausen-Zeiten, der Übergang in Dauerwischbetrieb und die Wischgeschwindigkeit während letzterem eingestellt und solchermaßen der Wischermotor-Betrieb über das Steuergerät (3, 4) geregelt wird,
d) manueller Ausstieg aus dem Automatikprogramm durch Einstellung des Betriebsartenschalters (8) in eine andere als momentan gegebene Schaltstufe und/oder durch Abschaltung mittels des Automatik-Ein-Aus-Schalters (10).

2. Steuereinrichtung nach Anspruch 1, wobei ein fahrgeschwindigkeitsabhängig arbeitendes Automatikprogramm vorgesehen ist, bei dessen Abrufung vom Fahrer durch Betätigung des Automatik-Ein-Aus-Schalters (10) bei gleichzeitig in Schaltstellung 0 (= Aus) befindlichem Betriebsartenschalter (8) sowie in beliebiger Einstellposition befindlichem Vorwahlorgan (9) vom Computer (2)
bei V = V₁ (0 km/h) ein Intervallbetrieb mit bestimmter Pausenzeit,
bei V ≦ V₂ (20 km/h) > V₁ ein Intervallbetrieb mit kürzerer Pausenzeit,
bei V ≦ V₃ (40 km/h) > V₂ ein Intervallbetrieb mit noch kürzerer Pausenzeit,
bei V ≦ V₄ (60 km/h) > V₃ ein langsamer Dauerbetrieb,
bei V ≦ V₅ (80 km/h) > V₄ ein schnellerer Dauerbetrieb, und
bei V > V₅ der schnellste Dauerbetrieb
initiiert wird.

3. Steuereinrichtung nach Anspruch 1, wobei ein fahrgeschwindigkeitsabhängig arbeitendes Automatikprogramm vorgesehen ist, bei dessen Abrufung vom Fahrer durch Betätigung des Automatik-Ein-Aus-Schalters (10) bei gleichzeitig in Schaltstellung 0 (= Aus) befindlichem Betriebsartenschalter (8) sowie in beliebiger Einstellposition befindlichem Vorwahlorgan (9) vom Computer (2)
bei V = V₁ (0 km/h) ein Intervallbetrieb mit bestimmter Pausenzeit,
bei V ≦ V₂ (20 km/h) > V₁ ein Intervallbetrieb mit kürzerer Pausenzeit,
bei V ≦ V₃ (40 km/h) > V₂ ein Intervallbetrieb mit noch kürzerer Pausenzeit,
bei V ≦ V₄ (60 km/h) > V₃ ein langsamer Dauerbetrieb, und
bei V > V₄ mit zunehmender Geschwindigkeit ein entsprechend zunehmend schnellerer Dauerbetrieb
initiiert wird.

4. Steuereinrichtung nach Anspruch 1, wobei ein fahrgeschwindigkeitsabhängig arbeitendes Automatikprogramm vorgesehen ist, bei dessen Abrufung vom Fahrer durch Betätigung des Automatik-Ein-Aus-Schalters (10) und des Betriebsartenschalters (8) in Schaltstellung 1 (= Intervallbetrieb) - bei gleichzeitig in beliebiger Einstellposition befindlichem Vorwahlorgan (9) - vom Computer (2)
bei V = V₁ (0 km/h) ein Intervallbetrieb mit bestimmter Pausenzeit,
bei V = V₂ (20 km/h) > V₁ ein Intervallbetrieb mit kürzerer Pausenzeit,
bei V = V₃ (40 km/h) > V₂ ein Intervallbetrieb mit noch kürzerer Pausenzeit, und
bei V > V₃ ein Intervallbetrieb mit kürzester Pausenzeit
initiiert wird.

5. Steuereinrichtung nach Anspruch 1, wobei ein fahrgeschwindigkeitsabhängig arbeitendes Automatikprogramm vorgesehen ist, bei dessen Abrufung vom Fahrer durch Betätigung des Automatik-Ein-Aus-Schalters (10) - bei in Schaltstellung 1 (= Intervallbetrieb) befindlichem Betriebsartenschalter (8) und bei sich in einer von der Grundstellung verschiedenen Vorwahlstellung befindlichem Vorwahlorgan (9) - vom Computer (2) zunächst eine Fortsetzung des Intervallbetriebs mit einer jener der manuellen Vorwahl entsprechenden Pausenzeit und dann bei sich anschließend vergrößernder Fahrgeschwindigkeit ein Intervall-Betrieb mit kürzeren Pausenzeiten, bei sich anschließend verkleinernder Fahrgeschwindigkeit ein Intervall-Betrieb mit längeren Pausenzeiten initiiert wird.

6. Steuereinrichtung nach Anspruch 1, wobei ein fahrgeschwindigkeitsabhängig arbeitendes Automatikprogramm vorgesehen ist, bei dessen Abrufung vom Fahrer durch Betätigung des Automatik-Ein-Aus-Schalters (10) - bei in Schaltstellung 2 (= Dauerbetrieb) befindlichem Betriebsartenschalter (8) und in beliebiger Einstellposition befindlichem Vorwahlorgan (9) - vom Computer (2)
bei V ≦ V₄ (60 km/h) ein langsamer Dauerbetrieb
bei V ≦ V₅ (80 km/h) > V₄ ein schnellerer Dauerbetrieb, und
bei V > V₅ der schnellste Dauerbetrieb
initiiert wird.

7. Steuereinrichtung nach Anspruch 1, wobei ein fahrgeschwindigkeitsabhängig arbeitendes Automatikprogramm vorgesehen ist, bei dessen Abrufung vom Fahrer durch Betätigung des Automatik-Ein-Aus-Schalters (10) - bei in Schaltstellung 2 (= Dauerbetrieb) befindlichem Betriebsartenschalter (8) und bei in einer von der Grundstellung verschiedenen Vorwahlstellung befindlichem Vorwahlorgan (9) - vom Computer (2) zunächst eine Fortsetzung des Dauerbetriebs mit einer jener der manuellen Vorwahl entsprechenden Wischergeschwindigkeit und dann bei sich anschließend erhöhender Fahrgeschwindigkeit eine schrittweise oder stufenlose Vergrößerung der Wischgeschwindigkeit, bei sich anschließend verkleinernder Fahrgeschwindigkeit eine schrittweise oder stufenlose bis zu einem von Null verschiedenen Minimum gehende Reduzierung der Wischgeschwindigkeit initiiert wird.

8. Steuereinrichtung nach Anspruch 1, wobei ein vom Nässegrad der zu wischenden Scheibe abhängig arbeitendes Automatikprogramm vorgesehen ist, bei dessen Abrufung vom Fahrer durch Betätigung des Automatik-Ein-Aus-Schalters (10) und bei in beliebiger Position befindlichem Betriebsartenschalter (8) und Vorwahlorgan (9) - vom Computer (2) bei geringer Nässe ein Intervallbetrieb mit bestimmter Pausenzeit, bei mittelstarker Nässe ein Intervallbetrieb mit kürzeren Pausenzeiten, bei größerer Nässe ein Übergang von Intervall - auf langsamen Dauer-Betrieb und bei weiter bis zu einem Maximum zunehmender Nässe eine Vergrößerung der Dauerwischgeschwindigkeit durch entsprechende Regelung der Wischermotordrehzahl bis zu nₘₐₓ initiiert wird.

9. Steuereinrichtung nach Anspruch 1, wobei, wenn ein sowohl vom Nässegrad der zu wischenden Scheibe als auch von der Fahrgeschwindigkeit abhängig arbeitendes Automatikprogramm vorgesehen ist, bei Abrufung desselben vom Fahrer durch Betätigung des Automatik-Ein-Aus-Schalters (10) - bei in beliebiger Einstellposition befindlichem Betriebsartenschalter (8) und Vorwahlorgan (9) - vom Computer (2)
a) bei V = V₁ (= 0 km/h) und geringer Nässe ein Intervallbetrieb mit bestimmter Pausenzeit,
b) bei gleichbleibender Nässe aber zunehmender Fahrgeschwindigkeit bei V ≦ V₂ (20 km/h) > V₁ ein Intervallbetrieb mit kürzerer Pausenzeit, bei V ≦ V₃ (40 km/h) > V₂ ein Intervallbetrieb mit noch kürzerer Pausenzeit, bei V ≦ V₄ (60 km/h) > V₃ ein langsamer Dauerbetrieb und bei V > V₄ ein der zunehmenden Fahrgeschwindigkeit entsprechend zunehmend schnellerer Dauerbetrieb, oder
c) bei zunehmender Nässe und zunehmender bzw. von V₁ verschiedener Geschwindigkeit (V = V₁) ein Intervallbetrieb mit kürzerer Pausenzeit sowie ein Übergang in Dauerbetrieb mit zunehmender Dauerwischgeschwindigkeit durch entsprechende Regelung der Wischermotordrehzahl bis nₘₐₓ initiiert wird.

## Claims

1. Control apparatus for the screen-wiping operation of a motor vehicle, having a computer (2) and a further control device (3, 4) for controlling the operation of the wiper motor (1) or the wiper motors (1, 1a), a mode selector switch (8) having at least three switch positions (0 = off, 1 = intermittent operation, 2 = continuous operation), a pre-selection member (9) for setting the intermittent break time and wiping rate, and an automatic on/off switch (10), these components enabling the following combined operational possibilities:
a) manual switching on of the intermittent wiping operation (mode selector switch from 0 to 1) and manual pre-selection of the intermittent break time, possible continuously variably or in pre-fixed steps (adjusting the pre-selection member), detection and conversion of these settings by computer (2), which then regulates the wiper motor operation by way of the control device (3, 4),
b) manual switching on of the continuous wiping operation (mode selector switch from 0 or 1 to 2) and manual pre-selection of the wiping rate, possible continuously variably or in pre-fixed steps (adjusting the pre-selection member), detection and conversion of these settings by computer (2), which then regulates the wiper motor operation by way of the control device (3, 4),
c) manual callings of an automatic program which is specific in dependence on the position (0, 1 or 2) of the mode selector switch (8) (operating the automatic on/off switch (10)), whereupon the computer (2), on the basis thereof in dependence on the driving speed and/or a detected degree of wetness, adjusts the intermittent break times, the transition to continuous wiping operation and the wiping rate during the latter and in this manner the wiper motor operation is regulated by way of the control device (3, 4),
d) manual exit from the automatic program by setting the mode selector switch (8) to a different switch stage specified as current and/or by switching off by means of the automatic on/off switch (10).

2. Control apparatus according to Claim 1, wherein an automatic program operating in dependence on driving speed is provided and when the latter is called by the driver by actuating the automatic on/off switch (10) with the mode selector switch (8) at the same time in switch position 0 (= off) and with the pre-selection member (9) in any set position, the following is initiated by the computer (2):
when V = V₁ (0 km/h) intermittent operation with a given break time,
when V ≦ V₂ (20 km/h) > V₁ intermittent operation with a shorter break time,
when V ≦ V₃ (40 km/h) > V₂ intermittent operation with an even shorter break time,
when V ≦ V₄ (60 km/h) > V₃ slow continuous operation,
when V ≦ V₅ (80 km/h) > V₄ faster continuous operation, and when V > V₅ fastest continuous operation.

3. Control apparatus according to Claim 1, wherein an automatic program operating in dependence on driving speed is provided and when the latter is called by the driver by actuating the automatic on/off switch (10) with the operating mode switch (8) at the same time being in switch position 0 (= off) and with the pre-selection member (9) in any set position, the following is initiated by the computer (2):
when V = V₁ (0 km/h) intermittent operation with a given break time,
when V ≦ V₂ (20 km/h) > V₁ intermittent operation with a shorter break time,
when V ≦ V₃ (40 km/h) > V₂ intermittent operation with an even shorter break time,
when V ≦ V₄ (60 km/h) > V₃ slow continuous operation,
when V > V₄ at increasing speed, a correspondingly increasingly faster continuous operation.

4. Control apparatus according to Claim 1, wherein an automatic program operating in dependence on driving speed is provided and when the latter is called by the driver by actuating the automatic on/off switch (10) and the operating mode switch (8) which is in switch position 1 (= intermittent operation) - with the pre-selection member (9) at the same time in any set position - the following is initiated by the computer (2):
when V = V₁ (0 km/h) intermittent operation with a given break time,
when V = V₂ (20 km/h) > V₁ intermittent operation with a shorter break time,
when V = V₃ (40 km/h) > V₂ intermittent operation with an even shorter break time, and
when V > V₃ intermittent operation with the minimum break time.

5. Control apparatus according to Claim 1, wherein an automatic program operating in dependence on driving speed is provided and when the latter is called by the driver by actuating the automatic on/off switch (10) - with the operating mode switch (8) in switch position 1 (= intermittent operation) and with the pre-selection member (9) in a pre-selected position which is different from the initial position - the computer (2) first initiates a continuation of intermittent operation with a break time corresponding to that of manual pre-selection and then, as the driving speed subsequently increases, initiates intermittent operation with shorter break times, and as the driving speed subsequently becomes less, initiates intermittent operation with longer break times.

6. Control apparatus according to Claim 1, wherein an automatic program operating in dependence on driving speed is provided and when the latter is called by the driver by actuating the automatic on/off switch (10) - with the operating mode switch (8) in switch position 2 (= continuous operation) and the pre-selection member (9) in any set position - the following is initiated by the computer (2):
when V ≦ V₄ (60 km/h) slow continuous operation,
when V ≦ V₅ (80 km/h) > V₄ faster continuous operation, and when V > V₅ fastest continuous operation.

7. Control apparatus according to Claim 1, wherein an automatic program operating in dependence on driving speed is provided and when the latter is called by the driver by actuating the automatic on/off switch (10) - with the operating mode switch (8) in switch position 2 (= continuous operation) and with the pre-selection member (9) in a pre-selected position which is different from the initial position - the computer (2) first initiates a continuation of the continuous operation at a wiper speed corresponding to that of manual pre-selection and then, as the driving speed subsequently increases, initiates a stepwise or continuously variable increase in the wiper speed, and as the driving speed subsequently becomes less, initiates a stepwise or continuously variable reduction in the wiper speed which goes to a minimum different from zero.

8. Control apparatus according to Claim 1, wherein an automatic program operating in dependence on the degree of wetness of the screen to be wiped is provided and when the latter is called by the driver by actuating the automatic on/off switch (10) and with the operating mode switch (8) and the pre-selection member (9) in any position - the computer (2) initiates, when there is little wetness, intermittent operation with a given break time, when there is medium wetness, intermittent operation with shorter break times, when there is a high degree of wetness, a transition from intermittent to slow continuous operation and when the wetness increases further to a maximum, an increase in the continuous wiping rate by appropriate regulation of the wiper motor speed up to nₘₐₓ.

9. Control apparatus according to Claim 1, where if an automatic program which operates in dependence both on the degree of wetness of the screen to be wiped and on the driving speed is provided, when the latter is called by the driver by actuating the automatic on/off switch (10) - with the operating mode switch (8) and the pre-selection member (9) in any set position - the following is initiated by the computer (2):
a) when V = V₁ (= 0 km/h) and with a low degree of wetness, intermittent operation with a given break time,
b) with constant wetness but increasing driving speed, when V ≦ V₂ (20 km/h) > V₁, intermittent operation with a shorter break time, when V ≦ V₃ (40 km/h) > V₂, intermittent operation with an even shorter break time, when V ≦ V₄ (60 km/h) > V₃, slow continuous operation, and when V > V₄, continuous operation which becomes increasingly faster in accordance with the increasing driving speed, or
c) with increasing wetness and increasing speed or speed different from V₁, (V = V₁), intermittent operation with a shorter break time and a transition to continuous operation with increasing continuous wiping speed by appropriate regulation of the wiper motor speed up to nₘₐₓ.

## Revendications

1. Dispositif de commande pour faire fonctionner l'essuie-glace d'un véhicule à moteur avec un ordinateur (2) et un autre appareil de commande (3, 4) pour commander le fonctionnement du moteur d'essuie-glace (1) ou des moteurs d'essuie-glace (1, 10), avec un sélecteur de fonctions (8) ayant au moins trois positions de commutation (0 = arrêt, 1 = fonctionnement intermittent, 2 = fonctionnement en continu), un organe de présélection (9) pour régler le temps de la pause en fonctionnement intermittent et la vitesse de l'essuie-glace et avec un commutateur de marche-arrêt de l'automatisme (10), lesquels composants permettent d'avoir les possibilités suivantes d'opérations combinées :
a) branchement manuel du fonctionnement intermittent de l'essuie-glace (sélecteur de fonctions passant de 0 après 1) et présélection manuelle possible de façon continue ou par des seuils prédéfinis de façon fixe du temps de pause en fonctionnement intermittent (déplacer l'organe de présélection), reconnaissance et conversion de ces réglages par l'ordinateur (2), qui règle alors le fonctionnement du moteur de l'essuie-glace au moyen de l'appareil de commande (3, 4),
b) branchement manuel du fonctionnement de l'essuie-glace en continu (sélecteur de fonctions passant de 0 ou 1 après 2) et présélection manuelle possible de façon continue ou par seuils prédéfinis de façon fixe de la vitesse de l'essuie-glace (déplacer l'organe de présélection), reconnaissance et conversion de ces réglages par l'ordinateur (2), qui règle alors le fonctionnement du moteur de l'essuie-glace au moyen de l'appareil de commande (3, 4),
c) appel manuel d'un programme automatique spécifique selon la position (0, 1 ou 2) du sélecteur de fonctions (8) (actionner le commutateur de marche-arrêt de l'automatisme (10)), les temps de pause du fonctionnement intermittent, le passage au fonctionnement de l'essuie-glace en continu et la vitesse de l'essuie-glace pendant ce dernier fonctionnement étant déterminés et le fonctionnement du moteur de l'essuie-glace étant réglés par l'intermédiaire de l'appareil de commande (3, 4) par l'ordinateur (2) sur la base de ce programme en fonction de la vitesse de marche du véhicule et/ou d'un degré d'humidité détecté,
d) sortie manuelle du programme automatique en mettant le sélecteur de fonctions (8) dans un autre étage de commutation que celui qui existait momentanément et/ou en débranchant au moyen du commutateur de marche-arrêt de l'automatisme (10).

2. Dispositif de commande selon la revendication 1, dans lequel il est prévu un programme automatique travaillant en fonction de la vitesse de marche du véhicule, lors de l'appel duquel par le conducteur en actionnant le commutateur de marche-arrêt de l'automatisme (10) on initie avec l'ordinateur (2) alors que le sélecteur de fonctions (8) se trouve en même temps en position 0 (= arrêt) et que l'organe de présélection (9) se trouve dans la position de réglage que l'on veut,
- dans le cas où V = V₁ (0 km/h), un fonctionnement intermittent avec temps de pause déterminé,
- dans le cas où V ≦ V₂ (20 km/h) > V₁ un fonctionnement intermittent avec temps de pause plus court,
- dans le cas où V ≦ V₃ (40 km/h) > V₂ un fonctionnement intermittent avec un temps de pause encore plus court,
- dans le cas où V ≦ V₄ (60 km/h) > V₃ un fonctionnement lent en continu,
- dans le cas où V ≦ V₅ (80 km/h) > V₄ un fonctionnement plus rapide en continu et,
- dans le cas où V > V₅ le fonctionnement en continu le plus rapide.

3. Dispositif de commande selon la revendication 1, dans lequel il est prévu un programme automatique travaillant en fonction de la vitesse de marche du véhicule, lors de l'appel duquel par le conducteur en actionnant le commutateur de marche-arrêt de l'automatisme (10), on initie avec l'ordinateur (2) alors que le sélecteur de fonctions (8) se trouve en même temps en position 0 (= arrêt) et que l'organe de présélection (9) se trouve dans la position de réglage que l'on veut,
- dans le cas où V = V₁ (0 km/h), un fonctionnement intermittent avec temps de pause déterminé,
- dans le cas où V ≦ V₂ (20 km/h) > V₁ un fonctionnement intermittent avec temps de pause plus court,
- dans le cas où V ≦ V₃ (40 km/h) > V₂ un fonctionnement intermittent avec un temps de pause encore plus court,
- dans le cas où V ≦ V₄ (60 km/h) > V₃ un fonctionnement lent en continu,
- et dans le cas où V > V₄ avec une vitesse croissante un fonctionnement en continu plus rapide qui croit de façon correspondante.

4. Dispositif de commande selon la revendication 1, dans lequel il est prévu un programme automatique travaillant en fonction de la vitesse de marche du véhicule, lors de l'appel duquel par le conducteur en actionnant le commutateur de marche-arrêt de l'automatisme (10) et le sélecteur de fonctions (8) dans la position de commutation 1 (= fonctionnement intermittent) on initie par l'ordinateur (2) - alors qu'en même temps l'organe de présélection (9) se trouve dans la position de réglage que l'on veut :
- dans le cas où V = V₁ (0 km/h) un fonctionnement intermittent avec temps de pause prédéterminé,
- dans le cas où V = V₂ (20 km/h) > V₁ un fonctionnement intermittent avec temps de pause plus court,
- dans le cas où V = V₃ (40 km/h) > V₂ un fonctionnement intermittent avec temps de pause encore plus court et,
- dans le cas où V > V₃ un fonctionnement intermittent avec le temps de pause le plus court.

5. Dispositif de commande selon la revendication 1, dans lequel il est prévu un programme automatique travaillant en fonction de la vitesse de marche du véhicule, lors de l'appel duquel par le conducteur en actionnant le commutateur de marche-arrêt de l'automatisme (10) on initie, alors que le sélecteur de fonctions (8) se trouve dans la position de commutation 1 (= fonctionnement intermittent) et que l'organe de présélection (9) se trouve dans une position de présélection différente de la position de base, par l'ordinateur (2) d'abord un prolongement du fonctionnement intermittent avec un temps de pause correspondant à celui de la présélection manuelle et ensuite dans le cas où la vitesse de marche du véhicule va en augmentant un fonctionnement intermittent avec des temps de pause plus courts, et un fonctionnement intermittent avec des temps de pause plus longs quand la vitesse de marche du véhicule va ensuite en diminuant.

6. Dispositif de commande selon la revendication 1, dans lequel il est prévu un programme automatique travaillant en fonction de la vitesse de marche du véhicule, lors de l'appel duquel par le conducteur en actionnant le commutateur de marche-arrêt de l'automatisme (10) - alors que le sélecteur de fonctions (8) se trouve dans la position de commutation 2 (= fonctionnement en continu) et que l'organe de présélection (9) se trouve dans la position de réglage que l'on veut - on initie par l'ordinateur (2) :
- dans le cas où V ≦ V₄ -60 km/h) un fonctionnement lent en continu,
- dans le cas où V ≦ V₅ (80 km/h) > V₄ un fonctionnement en continu plus rapide,
- et dans le cas où V > V₅ le fonctionnement en continu le plus rapide.

7. Dispositif de commande selon la revendication 1, dans lequel il est prévu un programme automatique travaillant en fonction de la vitesse de marche du véhicule, lors de l'appel duquel par le conducteur en actionnant le commutateur de marche-arrêt de l'automatisme (10) on initie, alors que le sélecteur de fonctions (8) se trouve dans la position de commutation 1 (= fonctionnement intermittent) et que l'organe de présélection (9) se trouve dans une position de présélection différente de la position de base, par l'ordinateur (2) d'abord un prolongement du fonctionnement en continu avec une vitesse de l'essuie-glace correspondant à celle de la présélection manuelle et alors dans le cas où la vitesse de marche va ensuite en augmentant une augmentation pas à pas ou continue de la vitesse de l'essuie-glace, dans le cas où la vitesse de marche du véhicule va ensuite en se réduisant une réduction de la vitesse de l'essuie-glace pas à pas ou en continu jusqu'à un minimum différent de zéro.

8. Dispositif de commande selon la revendication 1, dans lequel on prévoit un programme automatique travaillant en fonction du degré d'humidité du pare-brise à essuyer, lors de l'appel duquel par le conducteur en actionnant le commutateur de marche-arrêt de l'automatisme (10) et alors que le sélecteur de positions (8) et l'organe de présélection (9) se trouvent dans n'importe quelle position, on initie par l'ordinateur (2) dans le cas d'une faible humidité un fonctionnement intermittent avec temps de pause déterminé, dans le cas d'une humidité moyennement forte un fonctionnement intermittent avec des temps de pause plus courts, dans le cas d'une plus grande humidité un passage du fonctionnement intermittent au fonctionnement lent en continu et dans le cas d'une humidité qui continue à croître jusqu'à un maximum une augmentation de la vitesse de l'essuie-glace fonctionnant en continu en opérant un réglage correspondant de la vitesse de rotation du moteur de l'essuie-glace allant jusqu'à une vitesse de rotation nₘₐₓ.

9. Dispositif de commande selon la revendication 1, dans lequel il est prévu un programme automatique travaillant aussi bien en fonction du degré d'humidité de la glace à essuyer que de la vitesse de marche du véhicule aussi, lors de l'appel duquel par le conducteur en actionnant le commutateur de marche-arrêt de l'automatisme (10) - alors que le sélecteur de fonctions (8) et l'organe de pré-sélection (9) se trouve dans n'importe laquelle des positions de réglage - on initie par l'ordinateur (2 ) :
a) dans le cas où V = V₁ (= 0 km/h) et d'une faible humidité un fonctionnement intermittent avec temps de pause déterminé,
b) dans le cas où l'humidité reste constante mais et la vitesse est croissante, si V ≦ V₂ (20 km/h) > V₁ un fonctionnement intermittent avec temps de pause plus court, si V ≦ V₃ (40 km/h) > V₂ un fonctionnement intermittent avec temps de pause encore plus court, dans le cas où V ≦ V₄ (60 km/h) > V₃ un fonctionnement lent en continu et dans le cas où V > V₄ un fonctionnement en continu plus rapide qui va en croissant de façon correspondante de la vitesse de marche du véhicule croissante,
c) dans le cas où l'humidité augmente et d'une vitesse (V = V₁) croissante ou différente de V₁ un fonctionnement intermittent avec temps de pause plus court ainsi qu'un passage au fonctionnement en continu avec une vitesse croissante de fonctionnement en continu par le réglage correspondant de la vitesse de rotation du moteur de l'essuie-glace allant jusqu'à nₘₐₓ.
